# EUROPEAN PATENT APPLICATION

(11) **EP 2 468 398 A1**
(43) Date of publication of application: **27.06.2012**
(21) Application number: 10196517.6
(22) Date of filing: 22.12.2010
(51) Int. Cl.: B01J 23/44, B01J 23/52, C01B 15/029

(54) **Process for the electrochemical synthesis of hydrogen peroxide and use of a catalyst therefore**

(71) Applicant: Solvay SA, 1050 Brussels (BE)
(72) Inventor: Schiffrin, David Jorge, WIRRAL, Cheshire CH47 3BY (GB); Staszak-Jirkovsky, Jakub, 41324, Göteborg (SE); Halasa, Matej, 7860, LESSINES (BE)
(74) Representative: Vande Gucht, Anne

(57) **Abstract**

A process for the electrochemical synthesis of hydrogen peroxide, comprising reacting oxygen and hydrogen in the presence of a catalyst comprising at least gold and palladium deposited on a carrier, wherein the molar ratio of gold to palladium is higher than 1:1.

## Description

The present invention relates to a process for the electrochemical synthesis of hydrogen peroxide and to the use of a catalyst therefore. In particular, the present invention relates to a process for the electrochemical synthesis of hydrogen peroxide starting from hydrogen and oxygen.

Hydrogen peroxide is one of the most important inorganic chemicals to be produced worldwide. The world production of H₂O₂ grew to 2.2 million tons (100 % H₂O₂) in 2007. Its industrial application includes textile, pulp and paper bleaching, organic synthesis (propylene oxide), the manufacture of inorganic chemicals and detergents, environmental and other applications.

Synthesis of hydrogen peroxide is predominantly achieved by using the Riedl-Pfleiderer process. This well known cyclic process makes use of the autooxidation of a 2-alkyl anthrahydroquinone compound to the corresponding 2-alkyl anthraquinone which results in the production of hydrogen peroxide. Such process requires very large amounts of organic solvents and thus cannot be considered as strictly environmentally friendly. Such process is also energy-consuming. And last but not least, such process typically requires huge plants, which is not compatible with on-site and on-demand production.

Various methods for the direct synthesis of hydrogen peroxide from hydrogen and oxygen, in an aqueous medium, have also been proposed. For instance, US 5,505,921 discloses a process for the production of hydrogen peroxide by reacting a gas mixture containing hydrogen and oxygen in an aqueous reaction medium in the presence of a palladium/gold, palladium/iridium, or a palladium/rhodium bimetallic catalyst. It is also known from US 2008/0305033 A1 to manufacture hydrogen peroxide by directly reacting oxygen and hydrogen in the presence of a reaction medium comprising water and a water-miscible solvent and of a catalyst comprising gold and/or palladium particles, deposited onto a support. One of the main drawbacks of direct synthesis is the explosion risk, linked to the use of H₂/O₂ mixtures.

More recently, electrochemical reduction of oxygen on gold electrodeposited on an organic template has been investigated (F. Mirkhalaf, K. Tammeveski and D.J. Schiffrin, Physical Chemistry Chemical Physics, 11, 3463-3471 (2009)). The electrochemical reduction of oxygen can follow two main pathways: a four-electron reduction leading to water or OH⁻ ions in acid and alkaline solutions, respectively, and/or a two-electron reduction leading to the formation of hydrogen peroxide as an intermediate, depending on the experimental conditions. The hydrogen peroxide formed can be further reduced to water or disproportionation of two molecules of hydrogen peroxide into two molecules of water and one molecule of oxygen can occur. An additional advantage of such processes is related to the possible concomitant electricity production.

The application of these investigations to peroxide production requires, however, alkaline media and current membrane technology is not appropriate for their industrial implementation. In addition, such electrochemical reduction of oxygen to manufacture hydrogen peroxide still requires many developments to be industrially applicable, amongst which the development of catalysts showing a good selectivity towards the two-electron reduction pathway, as well as leading to an optimal hydrogen peroxide stability, avoiding further reduction or disproportionation of the formed hydrogen peroxide are essential.

The purpose of the present invention is to provide a process for the electrochemical synthesis of hydrogen peroxide which is environmentally friendly and which is compatible with on-site/on-demand production. Said purpose includes the development of new electrocatalysts for the electrochemical manufacture of hydrogen peroxide, having an improved selectivity for the two-electron reduction pathway, and leading to a decreased hydrogen peroxide decomposition.

The present invention therefore relates, in a first aspect, to a process for the electrochemical synthesis of hydrogen peroxide, comprising reacting oxygen and hydrogen in the presence of a catalyst comprising at least gold and palladium deposited on a carrier, wherein the molar ratio of gold to palladium is higher than 1:1, the reaction being especially in an electrochemical cell.

One of the essential features of the first aspect of the present invention resides in the use of a catalyst system comprising at least gold and palladium. Another essential feature of the present invention resides in the molar ratio gold to palladium which must be higher than 1:1. In the following, the expression "molar ratio of gold to palladium" means the averaged number of moles of gold per mole of palladium. This expression could be replaced by "atomic ratio of gold to palladium", which means the averaged number of gold atoms per palladium atom".

Indeed, it has been surprisingly found that said bimetallic catalyst systems lead to an increased selectivity for the two-electron reduction of oxygen, compared to the four-electron pathway, thus favoring the production of hydrogen peroxide rather than water. It has also been surprisingly found that such bimetallic catalyst systems lead to an improved stability of the produced hydrogen peroxide, with a decreased tendency of said hydrogen peroxide to undergo decomposition, especially further reduction to water or disproportionation to water and oxygen. This results in an improved productivity

In this first aspect of the present invention, the molar ratio of gold to palladium is higher than 1:1, commonly equal to or higher than 1.5:1, preferably equal to or higher than 2:1, more preferably equal to or higher than 3:1, most preferably equal to or higher than 4:1, in particular at least 5:1, advantageously at least 7:1, for instance at least 9:1. The molar ratio of gold to palladium is typically equal to or lower than 100:1, in particular equal to or lower than 75:1, more particularly equal to or lower than 50:1, most particularly equal to or lower than 25:1, for example equal to or lower than 20:1. Suitable ranges for the gold/palladium ratio in the process of the present invention are for instance from 1.5:1 to 100:1, from 3:1 to 50:1, or from 5:1 to 25:1, for example about 10:1.

The carrier (or catalyst support) may be selected from any kind of carrier known in the art, for instance from the group consisting of titanium dioxide, zirconium dioxide and iron oxides based materials, silicon carbide, and carbon, preferably carbon. Carbon support may be selected from various types of carbon such as graphite, carbon black, glassy carbon, activated carbon, highly oriented pyrolytic graphite (HOPG) and single-walled and multi-walled carbon nanotubes, especially from carbon black and activated carbon. The carrier may be porous or non-porous, preferably porous. The carrier may have any kind of S_{BET} specific surface but advantageously it has a S_{BET} specific surface area of more than 100 m²/g, often equal to or more than 200 m²/g, for instance equal to or more than 300 m²/g.

Carbon supports may be used directly or after treatment, for instance after washing using a dilute acid such as dilute nitric acid; after treatment in acid reflux, for instance using concentrated nitric acid; and/or after heat treatment, for instance under argon at 1000°C. Carbon supports may also be functionalized, especially via grafting of functional groups such as nitro (-NO₂), nitroso (-NO), amino (-NR₂ wherein R are independently H or an alkyl or aryl group, preferably -NRH, more preferably -NH₂), hydroxylamine (-NROH wherein R is H or an alkyl or aryl group, preferably -NHOH); advantageously via grafting with amino groups, especially with -NH₂ groups, for instance with 4-aminophenyl groups.

In this first aspect of the present invention, the total amount of gold and palladium in the catalyst is usually from 0.1 to 75 wt%, preferably from 1 to 50 wt%, more preferably from 3 to 30 wt%, most preferably from 5 to 10 wt%. The amount of gold in the catalyst is generally from 0.05 to 70 wt%, in many cases from 0.1 to 50 wt%, in more cases from 1 to 30 wt%, in most cases from 5 to 10 wt%. The amount of palladium in the catalyst is in general from 0.01 to 20 wt%, often from 0.05 to 10 wt%, more often from 0.1 to 5 wt%, most often from 0.5 to 2 wt%.

In a second aspect, the present invention relates to a process for the electrochemical synthesis of hydrogen peroxide comprising reacting oxygen and hydrogen in the presence of a catalyst comprising at least gold and palladium deposited on a carrier, wherein the carrier is carbon grafted with at least amino, polyamines or phosphorous containing functional groups. This has the particular advantage to improve the connectivity of the catalyst, i.e. an improved contact between the metal particles and the support.

Grafting of the carbon support with functional groups such as amino, polyamines or phosphorous containing functional groups, has the advantage to improve the adsorption of the gold and palladium metals onto the catalyst support, which prevents metal leaching (or disconnection), without decreasing the activity of the resulting catalyst. Indeed, said grafting also favors the growth of the gold and palladium nanoparticles onto the surface of the catalyst support, limiting their agglomeration. This renders the use of an organic stabilizer unnecessary. This is especially advantageous as the use of such an organic stabilizer leads to a decrease of the reactivity of the catalyst, which has to be avoided. It also renders unnecessary the heat treatment step usually conducted to remove said organic stabilizer from the catalyst. The grafting of the carbon support will also allow deposition of gold and palladium nanostructures.

In this second aspect of the invention, the amino groups are typically -NR₂ groups wherein R are independently H or an alkyl or aryl group, preferably - NRH, more preferably -NH₂ groups such as 4-aminophenyl groups. The amount of amino groups is commonly from 1 to 20×10⁻¹⁰ mol/cm², frequently from 3 to 18×10⁻¹⁰ mol/cm², especially from 6 to 12×10⁻¹⁰ mol/cm², for instance around 9× 10⁻¹⁰ mol/cm². If other functional groups are grafted onto the surface of the carbon support, amino groups are present in an amount of at least 50%, preferably at least 70%, more preferably at least 80%, most preferably at least 90%, for instance all or substantially all the functional groups being amino groups. Other functional groups such as polyamines or phosphorous containing functional groups can be equally effective.

In this second aspect, the carbon support used as carrier is usually selected from the group consisting of graphite, carbon black, activated carbon, glassy carbon, highly oriented pyrolytic graphite (HOPG) and single-walled and multi-walled carbon nanotubes, preferably carbon black or activated carbon. The carbon support may be porous or non-porous, preferably porous. The carbon support may have any kind of S_{BET} specific surface but advantageously a S_{BET} specific surface area of more than 100 m²/g, often equal to or more than 200 m²/g, for instance equal to or more than 300 m²/g.

The carbon support may be grafted directly or after a preliminary treatment of the carbon support, for instance after washing using a dilute acid such as dilute nitric acid; after treatment in acid reflux, for instance using concentrated nitric acid; and/or after heat treatment, for instance under argon at 1000°C.

The grafting of the carbon support with amino groups may be conducted by any method known in the art. Typically, the carbon can be grafted with 4-nitrophenyl moieties which can be further reduced into 4-aminophenyl groups. Said grafting with 4-nitrophenyl moieties may be electrochemically or chemically induced or can be conducted in a so-called spontaneous way.

Electrochemically induced modification of carbon with 4-nitrophenyl moieties is for instance described by S. Liu et al. in Electrochemistry Communications, 2, 800-804 (2000) or by M. Bayati in Journal of Electroanalytical Chemistry, 623, 19-28 (2008), which are incorporated herewith by reference. For instance, 4-nitrophenyl grafted carbon substrate may be prepared by contacting the carbon substrate with 4-nitrophenyl diazonium tetrafluoroborate and submitting the mixture to electrolysis. The 4-nitrophenyl moieties can then be further electrolyzed in a protonic solution, to form 4-aminophenyl groups. It is also possible to used chemically induced modification of carbon with 4-nitrophenyl moieties using reducing agents, for instance using soluble reducing agents.

The spontaneous grafting of the carbon substrate with 4-nitrophenyl moieties can occur when the carbon support is contacted with diazonium ions, such as 4-nitrophenyldiazonium tetrafluoroborate, in acidic water. Indeed, diazonium ions are known to decompose in acidic water in the presence of a nucleophile such as electron-donating groups such as π-electron systems. Without being bound by any theory, it is believed that the carbon π-electron system of the carbon support will act as a nucleophile and will transfer the electrons needed for the reduction of the diazonium cations, therefore leading to the formation of phenyl radicals, followed by the heterolytic formation of a covalent C-C bond between the surface of the carbon support and the phenyl radical. Said spontaneous grafting is described by M. Toupin et al. in Langmuir, 24, 1910-1917 (2008), which is incorporated herewith by reference. According to this reference, the grafting with 4-nitrophenyl moieties may for instance be conducted by dispersing the carbon in deionized water to which 4-nitroaniline is added, followed by sodium nitrite and finally concentrated hydrochloric acid, the mixture being then stirred at room temperature, filtered and washed and the resulting powder being dried. The grafting with 4-nitrophenyl moieties may also be conducted by dispersing the carbon in deionized water, followed by the addition of 4-nitrophenyldiazonium tetrafluoroborate and hypophosphorous acid (H₃PO₂), the mixture being then stirred at room temperature, filtered and washed and the resulting powder being dried.

The reduction of the 4-nitrophenyl moieties into 4-aminobenzene groups may be conducted by any method known in the art, for instance by chemical reduction using SnCl₂.

In this second aspect of the invention, the molar ratio of gold to palladium is preferably of at least 1:1, commonly higher than 1:1, in particular equal to or higher than 1.5:1, preferably equal to or higher than 2:1, more preferably equal to or higher than 3:1, most preferably equal to or higher than 4:1, especially at least 5:1, advantageously at least 7:1, for instance at least 9:1. The molar ratio of gold to palladium is typically equal to or lower than 100:1, in particular equal to or lower than 75:1, more particularly equal to or lower than 50:1, most particularly equal to or lower than 25:1, for example equal to or lower than 20:1. Suitable ranges for the gold/palladium ratio in the process of the present invention are for instance from 1.5:1 to 100:1, from 3:1 to 50:1, or from 5:1 to 25:1, for example about 10:1.

In a special embodiment, the two above-mentioned aspects of the invention may be combined, wherein the catalyst comprises at least gold and palladium deposited on a carrier which is a carbon support grafted with amino groups, and wherein the molar ratio of gold to palladium is higher than 1:1.

The following applies to the two above-mentioned aspects of the invention. The following may apply independently from one another or combined to one another, advantageously at least partially combined to one another.

Deposition of gold and palladium onto the catalyst support to manufacture the catalyst may be performed by any method known in the art, especially starting from metallic gold and metallic palladium or starting from gold and palladium precursors.

The carrier (or catalyst support) may be present in the form of a solid, but it is advantageously present in the form of a dispersion in an aqueous or organic medium, especially in the form of an aqueous dispersion. A dispersion comprising from 0.01 to 10 wt% of catalyst support may for instance be used, usually from 0.05 to 5 wt%, especially from 0.1 to 3 wt%.

In a first specific embodiment, the catalyst manufacturing method may include direct deposition of metallic gold and metallic palladium onto the catalyst support. The metallic gold and palladium are typically used in the form of a dispersion in an aqueous or organic medium, generally in the form of an aqueous dispersion. This dispersion is advantageously a colloidal dispersion, i.e. a suspension (or colloid) of sub-micrometre-sized particles of gold and/or palladium in a fluid. The metallic gold and/or palladium dispersion may have any suitable concentration, often from 1 to 1000 mg/L, more often from 10 to 500 mg/L, most often from 20 to 400 mg/L, for instance about 30 to 40 mg/L.

The above-mentioned colloidal dispersion comprising metallic gold and/or metallic palladium may be prepared by reduction of gold and/or palladium precursors, especially in the form of a solution, prior to their deposition onto the catalyst support. Suitable gold and palladium precursors are described in more details below, in the paragraphs related to the second specific aspect. Suitable reducing agents, useful for the reduction of the gold and/or palladium precursors, are described in more details below.

Advantageously, the colloidal dispersion comprises both metallic gold and palladium. It is also possible to combine colloidal dispersions comprising respectively gold and palladium, before the deposition of the metallic gold and palladium onto the catalyst support. This allows the preparation of catalysts with a substantially homogeneous or regular repartition of the gold and palladium metallic atoms at the surface of the support, and especially a quite homogeneous dispersion of the palladium atoms amongst the gold atoms.

In a second specific embodiment, the catalyst manufacturing method may include adsorption of gold and palladium precursors onto the catalyst support, followed by their reduction, in situ, at the surface of the catalyst support. Gold and palladium precursors may be selected from any suitable gold and palladium metal sources, especially from gold and palladium salts that can act as gold and palladium metal sources, typically after reduction. Suitable examples of gold precursors may be selected from the group consisting of HAuCl₄, optionally under hydrated form such as HAuCl₄.3H₂O, NaAuCl₄, AuCl₃, and mixtures thereof. Suitable examples of palladium precursors may be selected from the group consisting of PdCl₂, Na₂PdCl₄, K₂PdCl₄, Li₂PdCl₄, (NH₄)₂PdCl₄, K₂PdCl₆, (NH₄)₂PdCl₆, and mixtures thereof. The gold and palladium precursors are typically used in the form of a dispersion or of a solution in an aqueous or organic medium, preferably in the form of a solution, especially in the form of an aqueous solution. The dispersion or solution comprising the gold and/or palladium precursors may have any suitable concentration, often from 1 to 1000 mg/L, more often from 10 to 500 mg/L, most often from 20 to 400 mg/L, for instance about 30 to 40 mg/L.

Said gold and palladium precursors are then transformed into metallic gold and metallic palladium via at least one of heat treatment, chemical reduction in the presence of a reducing agent, or electrochemical reduction (electrodeposition). For instance, the catalyst support deposited with gold and palladium precursors may be heat treated, or chemically reduced, or electrochemically reduced, or any combination thereof, for instance heat treated and then chemically reduced, or chemically reduced and then heat treated, etc. Both gold and palladium precursors may be deposited and transformed into metallic gold and metallic palladium at the same time. It is also possible to deposit gold and palladium sequentially and/or to transform the gold and palladium precursors into metallic gold and metallic palladium using different methods. For instance, both gold and palladium precursors may be deposited onto the catalyst support at the same time and then transformed into metallic gold and metallic palladium at the same time. It is also possible to first deposit gold (or palladium) precursor and to further deposit palladium (or gold) precursor, and then to transform them into metallic gold and metallic palladium. It is also possible to deposit gold (or palladium) precursor, to transform it into metallic gold (or palladium), to further deposit palladium (or gold) precursor, and to transform it into metallic palladium (or gold). Conveniently, both gold and palladium may be deposited simultaneously onto the catalyst support, for instance by reduction of mixed gold and palladium precursors. This allows the preparation of catalysts with a substantially homogeneous or regular repartition of the gold and palladium metallic atoms at the surface of the support, and especially a quite homogeneous dispersion of the palladium atoms amongst the gold atoms.

It is also possible to combine both the first and second specific embodiments described above. For instance, metallic gold (and/or metallic palladium) may be deposited, then a palladium (and/or gold) precursor may be deposited, followed by heat treatment, reduction with a reducing agent, and/or electrochemical reduction. Another example is deposition of a gold (and/or palladium) precursor followed by heat treatment, reduction with a reducing agent, and/or electrochemical reduction, then deposition of metallic palladium (and/or metallic gold). Conveniently, gold may be deposited first, for instance using a colloidal gold dispersion, followed by subsequent deposition of palladium, for instance by reduction of a palladium precursor.

Chemical reduction reactions are well known in the art. Suitable reducing agents are known in the art and may for instance be selected from the group consisting of H₂, NaH, LiH, LiAlH₄, NaBH₄, CaH₂, SnCl₂, diisobutylaluminium hydride (DIBAL-H), sodium citrate, disodium citrate, trisodium citrate, sodium formate, formic acid, and hydrazine. Advantageously, the reducing agent is NaBH₄ or H₂. NaBH₄ is especially suitable for the simultaneous reduction of mixed gold and palladium precursors. Furthermore, NaBH₄ is easy to use at industrial scale and allows an excellent control of the resulting nanoparticle size. H₂ is also especially suitable, for instance for the reduction of palladium precursor onto already deposited gold. The reducing agent is typically used in an amount which is at least the stoechiometric amount required to reduce the gold and palladium precursors, advantageously in excess compared to gold and palladium precursors, especially in an excess of at least 1.5 fold, often in an excess of at least 2 fold, more often in an excess of at least 3 fold, for example in an excess of at least 4 fold.

Electrodeposition (or electrochemical reduction) is also a method well known in the art, wherein a voltage is applied which gives electrons used to reduce the gold and/or palladium precursors into metallic gold and/or palladium.

Heat treatment is typically carried out at a temperature from 250 to 600°C, preferably from 270 to 500°C, more preferably from 280 to 400°C, for example around 290-320°C. Heat treatment may be conducted under any type of atmosphere such as air, oxygen containing atmosphere, reducing atmosphere, or inert atmosphere, for instance under nitrogen, argon, hydrogen or mixtures thereof, for instance under hydrogen/argon atmosphere.

In the first and second specific embodiments of the present invention, any suitable additive may be further added to the medium during the preparation of the catalyst, for instance in at least one of the mediums comprising the metallic gold and/or palladium or the gold and/or palladium precursors. Suitable additives are for instance dispersants or stabilizers, used to control particle size and to insure good monodispersity of the nanoparticle preparation. Suitable compounds are, by way of example, hydrolyzed polyvinyl alcohol (PVA), commonly with a molecular weight (M.W.) in the range from 1000 to 100000 g/mol; polyvinylpyrrolidone (PVP), typically with a M.W. in the range from 1000 to 1500000; carboxylic acids of general formula (CₓH_{y})(COOH)_{z}, where CₓH_{y} refers to an aliphatic chain which is attached to carboxylic group(s) (COOH)z, with x usually from 2 to 20, y commonly from 2 to 40, and z typically from 1 to 3, suitable examples being oleic acid or maleic acid; and mixtures thereof; hydrolyzed PVA being especially suitable.

After deposition of the gold and palladium onto the catalyst support, the supported catalyst may be recovered by any suitable separation method, such as filtration, decantation and/or centrifugation. Said supported catalyst may further be washed and dried, for instance at about 50 to 100°C, under air or under protective atmosphere, typically under air. The supported catalyst may also be further heat treated and/or reduced. For example, the supported catalyst may be further heat treated at a temperature from 250 to 600°C, preferably from 270 to 500°C, more preferably from 280 to 400°C, for example around 290-320°C. Said heat treatment is preferably conducted in the presence of nitrogen, argon, hydrogen or mixtures thereof, for instance under hydrogen/argon atmosphere.

The process of the present invention is typically conducted in an electrochemical cell, especially in a fuel cell, particularly in a hydrogen fuel cell or in a proton exchange membrane fuel cell (PEMFC). In the process of the present invention, the catalyst comprising at least gold and palladium deposited on a carrier is used as the cathode of the electrochemical cell. An especially suitable electrochemical cell is for instance a PEMFC wherein the cathode is the above-described supported catalyst, the anode is Pt/C, and the electrolyte is a polymer electrolyte membrane such as a perfluorosulfonic acid (PFSA) membrane such as Solvay Aquivion®.

The present process is usually conducted at a temperature of more than 0°C. The process is typically conducted at a temperature equal to or lower than 90°C, in particular equal to or lower than 50°C, more particularly equal to or lower than 30°C, most particularly equal to or lower than 20°C, especially equal to or lower than 10°C, for instance at about 1 to 5°C.

The present process is conducted in the presence of oxygen and hydrogen, the oxygen being introduced in the form of pure oxygen, of air, or of oxygen enriched air. The oxygen partial pressure (pO₂) is typically from 1 to 10 bar, particularly from 2 to 8 bar, for example about 4 to 5 bar. The hydrogen partial pressure (pH₂) is generally from 1 to 10 bar, conveniently from 1 to 5 bar, advantageously from more than 1 to 2 bar, for instance be about 1.1 to 1.2 bar. An inert gas such as nitrogen may also be present with oxygen and/or hydrogen gas, for instance to equilibrate the pressures on both sides of the electrochemical cell membrane.

Further to hydrogen and oxygen, the reaction medium may comprise any other suitable additional compound, for example at least one compound selected from water, organic solvents and mixtures thereof, preferably at least water. If an organic solvent is present, it is preferably a water-miscible organic solvent such as methanol. Said additional compound may be present in the fuel cell in any physical form, in particular in the form of a liquid, a vapor, a gas, or a mixture thereof. In a special embodiment, the oxygen and/or hydrogen gas may be sent to the fuel cell after having been bubbled through a liquid, for example via a humidifier containing water, therefore entraining at least part of said liquid into the fuel cell, typically in the form of vapor. Vapor is thus introduced into the fuel cell, wherein it can remain in the form of vapor or wherein it may at least partially condense.

The process of the present invention is environmentally friendly. Especially, it can be used without using organic solvents, especially non-environmentally friendly solvents. It can also be operated under mild operating conditions, with a reduced energy usage. The process of the present invention is especially suitable for on-site / on-demand production of hydrogen peroxide, among others due the small size of the production devices. This process is also safe, and in particular safer than catalytic hydrogen peroxide direct synthesis, as H₂ and O₂ are introduced separately which avoids H₂ and O₂ mixing therefore minimizing the risk of H₂/O₂ explosions. The process of the present invention also allows the production of crude hydrogen peroxide having a high purity. It is also possible to produce hydrogen peroxide having a high strength, for instance a concentration about 10 wt%. Such crude hydrogen peroxide is suitable for organic synthesis without further purification.

In view of the above, the present invention also relates to the use, for the electrochemical synthesis of hydrogen peroxide, of a catalyst comprising at least gold and palladium deposited onto a carrier, wherein the molar ratio of gold to palladium is higher than 1:1, commonly equal to or higher than 1.5:1, preferably equal to or higher than 2:1, more preferably equal to or higher than 3:1, most preferably equal to or higher than 4:1, in particular at least 5:1, advantageously at least 7:1, for instance at least 9:1. The molar ratio of gold to palladium is typically equal to or lower than 100:1, in particular equal to or lower than 75:1, more particularly equal to or lower than 50:1, most particularly equal to or lower than 25:1, for example equal to or lower than 20:1. Suitable ranges for the gold/palladium ratio are for instance from 1.5:1 to 100:1, from 3:1 to 50:1, or from 5:1 to 25:1, for example about 10:1.

The present invention also relates to the use, for the electrochemical synthesis of hydrogen peroxide, of a catalyst comprising at least gold and palladium deposited onto a carrier, wherein the carrier is carbon grafted with amino groups.

The present invention also relates to the use, for the electrochemical synthesis of hydrogen peroxide, of a catalyst comprising at least gold and palladium deposited onto a carbon support grafted with amino groups, wherein the molar ratio of gold to palladium is higher than 1:1.

Advantageously, said uses are for the electrochemical synthesis of hydrogen peroxide starting from oxygen and hydrogen, more preferably in a fuel cell.

Should the disclosure of any patents, patent applications, and publications which are incorporated herein by reference conflict with the description of the present application to the extent that it might render a term unclear, the present description shall take precedence.

### Examples

### Example 1: Preparation of Au₄Pd/C

An Au/Pd colloidal solution was prepared as follows. 132.2 mg of HAuCl₄.3H₂O and 14.9 mg of PdCl₂ were dissolved in 1.5 L Milli-Q water and then 75 mg of poly(vinyl alcohol) (PVA) dissolved in water (about 7.5 mg/ml) was added. Reduction of the Au and Pd salts was then performed by dropwise addition of 16.8 ml of aqueous NaBH₄ (0.1 mol/L) into the vigorously stirred solution.

A carbon black aqueous suspension was prepared by dispersing 300 mg of carbon black into 200 ml water in an ultrasonic bath during 60 minutes.

The Au-Pd colloidal solution was added to the carbon black aqueous suspension and the mixture was stirred for 1 hour in an ultrasonic bath. After 1 hour, the stirring was turned off and the carbon supported catalyst was left to settle down overnight. The slightly dark solution left above the catalyst indicated that some of the catalyst did not settle. The solution was decanted and the solid residue at the bottom was collected. The solid residue was washed with water and centrifuged 4 times. The recovered material was dried at 60°C in air and was then annealed for 6 hours under a 10% H₂/90% Ar stream at 300°C.

### Examples 2-6

The following catalysts (see Table 1) were prepared according to the method described in Example 1, but with adapted amounts of HAuCl₄.3H₂O and PdCl₂.

**Table 1**

| | Au/Pd molar ratio |
|---|---|
| Ex. 2 | Au only |
| Ex. 3 | 1:1 |
| Ex. 4 | 2,33:1 |
| Ex. 5 | 3:1 |
| Ex. 6 | 9:1 |

### Test of the catalysts for hydrogen peroxide synthesis

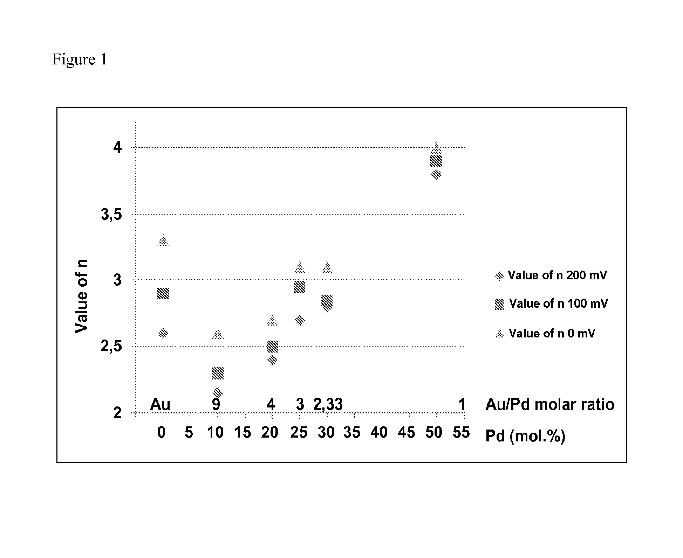

The electrochemical synthesis of hydrogen peroxide was tested using a proton exchange membrane fuel cell (PEMFC) equipped with the catalysts of Examples 1-6 as cathode, Pt/C as anode, and a perfluorosulfonic acid (PFSA) membrane of 110 µm as electrolyte (Solvay Aquivion®). The oxygen and hydrogen gas were sent to the fuel cell via a humidifier containing water at 50°C. The reaction conditions and the results are summarized in respectively Tables 2 and 3 below as well as in Figure 1.

**Table 2**

| | Reaction conditions |
|---|---|
| pO₂ (bar) | 4.72 |
| pH₂ (bar) | 1.16 |
| T (°C) | 2 |
| Humidification (% at 50°C) | 100 |

**Table 3**

| | H₂O₂ concentration (wt%) | Hydrogen selectivity (%) |
|---|---|---|
| Ex. 1 | 2.6 | 1.4 |

Hydrogen selectivity (%) is defined as the fraction of hydrogen having been converted to hydrogen peroxide and not to water.

Figure 1 presents the dependence of n, the number of electrons consumed per molecule of oxygen reduced, on catalyst composition (Au/Pd ratio) at different potentials (the reference electrode was the standard hydrogen electrode) obtained from electrochemical measurements with a rotating ring disk electrode. n =2 corresponds to the formation of pure H₂O₂ and n = 4 corresponds to formation of pure H₂O. This figure shows that for an Au/Pd ratio equal to 1 water is mainly formed, while a Au/Pd ratio higher than 1:1 leads to formation of hydrogen peroxide. For this preparation, a Au/Pd composition of 9:1 gives the maximum conversion of oxygen to peroxide, with a peroxide yield close to 100 % for a potential of 200 mV.

## Claims

1. A process for the electrochemical synthesis of hydrogen peroxide, comprising reacting oxygen and hydrogen in the presence of a catalyst comprising at least gold and palladium deposited on a carrier, wherein the molar ratio of gold to palladium is higher than 1:1, commonly equal to or higher than 2:1, preferably equal to or higher than 3:1, more preferably equal to or higher than 4:1, most preferably equal to or higher than 5:1.

2. Process according to claim 1, wherein the molar ratio of gold to palladium is equal to or lower than 100:1, in particular equal to or lower than 75:1, more particularly equal to or lower than 50:1, most particularly equal to or lower than 25:1.

3. Process according to claim 1 or 2, wherein the carrier has a specific surface area of more than 100 m²/g, preferably of more than 200 m²/g.

4. Process according to anyone of claims 1 to 3, wherein the carrier is selected from the group consisting of titanium dioxide, zirconium dioxide, iron oxides, silicon carbide, and carbon, especially carbon, more specifically carbon selected from the group consisting of graphite, carbon black, glassy carbon, activated carbon, highly oriented pyrolytic graphite, single-walled and multi-walled carbon nanotubes, in particular from carbon black and activated carbon, especially from carbon black or activated carbon grafted with amino, polyamines or phosphorous containing functional groups.

5. Process according to anyone of claims 1 to 4, wherein the total amount of gold and palladium in the catalyst is from 0.1 to 75 wt%, preferably from 1 to 50 wt%, more preferably from 3 to 30 wt%, most preferably from 5 to 10 wt%.

6. Process according to anyone of claims 1 to 5, wherein the amount of gold in the catalyst is from 0.05 to 70 wt%, in many cases from 0.1 to 50 wt%, in more cases from 1 to 30 wt%, in most cases from 5 to 10 wt%.

7. Process according to anyone of claims 1 to 6, wherein the amount of palladium in the catalyst is from 0.01 to 20 wt%, often from 0.05 to 10 wt%, more often from 0.1 to 5 wt%, most often from 0.5 to 2 wt%.

8. Process according to anyone of claims 1 to 7, wherein the reaction is conducted in an electrochemical cell, especially in a fuel cell, particularly in a hydrogen fuel cell or in a proton exchange membrane fuel cell.

9. Process according to claim 8, wherein the electrochemical cell comprises a cathode, an anode and an electrolyte, the cathode comprising the catalyst as defined in anyone of claims 1 to 7.

10. Process according to anyone of claims 1 to 9, wherein the reaction temperature is of more than 0°C and equal to or lower than 90°C, in particular equal to or lower than 50°C, more particularly equal to or lower than 30°C, most particularly equal to or lower than 20°C, especially equal to or lower than 10°C.

11. Process according to anyone of claims 1 to 10, wherein the oxygen partial pressure is from 1 to 10 bar, particularly from 2 to 8 bar, especially about 4 to 5 bar, and the hydrogen partial pressure is from 1 to 10 bar, conveniently from 1 to 5 bar, advantageously from more than 1 to 2 bar.

12. Process according to anyone of claims 1 to 11, wherein the reaction medium further comprises at least one compound selected from water, organic solvents and mixtures thereof, preferably at least water.

13. Use, for the electrochemical synthesis of hydrogen peroxide, of a catalyst comprising at least gold and palladium deposited on a carrier, wherein the molar ratio of gold to palladium is higher than 1:1, commonly equal to or higher than 2:1, preferably equal to or higher than 3:1, more preferably equal to or higher than 4:1, most preferably equal to or higher than 5:1.

14. Use according to claim 13, wherein the hydrogen peroxide is synthesized from oxygen and hydrogen.

15. Use according to claim 14, wherein the hydrogen peroxide is synthesized in a fuel cell.
